Europäisches Patentamt

European Patent Office

Office européen des brevets

(11) Numéro de publication: **0 062 585**
A1

# (12) DEMANDE DE BREVET EUROPEEN

(21) Numéro de dépôt: **82400607.6**

(22) Date de dépôt: **01.04.82**

(51) Int. Cl.³: **A 01 G 31/00,** A 01 G 31/02

(30) Priorité: **02.04.81 FR 8106666**
**02.03.82 FR 8203444**

(43) Date de publication de la demande: **13.10.82**
**Bulletin 82/41**

(84) Etats contractants désignés: **AT BE CH DE GB IT LI LU NL SE**

(71) Demandeur: **AGRO-TECHNICS INTERNATIONAL LTD.,**
**70, Finsbury Pavement, London EC2A 1SX (GB)**

(72) Inventeur: **de Monbrison, Christian, 29, rue Davioud,**
**F-75116 Paris (FR)**

(74) Mandataire: **Hufenus, Christiane et al, CABINET BEAU DE LOMENIE 55, rue d'Amsterdam, F-75008 Paris (FR)**

(54) **Procédé de culture fourragère hors-sol et dispositif pour sa réalisation.**

㉗ Procédé de culture fourragère hors-sol intégrant de façon semi-automatique, dans un seul dispositif, les cinq opérations de la germination sur plateaux superposès, à savoir: l'étalement des graines sur plateaux, le trempage des graines directement sur les plateaux, l'irrigation programmée des graines et des racines, le chauffage par résistances électriques incorporées dans les plateaux, l'injection éventuelle de solutions nutritives par pompe doseuse; et dispositif pour la réalisation de se procédé.

Procédé de culture fourragère hors-sol et dispositif pour sa réalisation.

Le procédé et le dispositif qui font l'objet de l'invention ont pour but de faire germer et de cultiver, hors-sol, sur des plateaux, en un temps très court, les graines traditionnellement utilisées, soit pures, soit en mélange, comme nourriture de base ou en complémentation sous toutes proportions, dans l'alimentation du gros bétail, du petit bétail, des gallinacés, des palmipèdes et des gibiers d'élevage.

L'invention concerne plus particulièrement des perfectionnements apportés aux procédés de culture existants en vue d'intégrer, de façon semi-automatique dans un seul dispositif, les cinq opérations de la culture sur plateaux superposés, c'est-à- dire :

- l'étalement des graines sur les plateaux de culture, manuellement ou à l'aide d'une trémie distributrice;
- le trempage des graines directement sur les plateaux de culture;
- l'irrigation programmée de graines et des racines;
- le maintien à température constante des graines et des racines par chauffage des plateaux, contrôlé par thermostat;
- éventuellement, l'injection de quantités dosées de solutions nutritives dans l'eau de trempage.

Il est connu de procéder à des cultures fourragères hors-sol. A cet effet, les graines ou semences prétrempées sont répandues dans des plateaux superposés en nombre tel que l'on puisse chaque jour récolter une culture par plateau, la germination devant durer suivant le cas de 8 à 15 jours.

Tous les procédés utilisés à ce jour montrent les inconvénients majeurs cités ci-après :
- ils nécessitent d'être réalisés dans un local chauffé à une température constante de 20°C, ce qui est très coûteux sur le plan de la consommation en énergie;
- la germination nécessitant toujours un prétrempage des graines, celui-ci s'effectuait dans des bacs de trempage en plusieurs manipulations, durant trois jours, avant d'étaler manuellement ces graines lourdes et gorgées d'eau sur des plateaux aux dimensions réduites et peu productives, d'où un excès de main-d'oeuvre;

0062585

- l'aspersion des graines réalisée manuellement ou par un système automatique se faisait d'une façon peu uniforme, ce qui provoquait une germination irrégulière et donc moins productive;

- le matériel était en général peu fiable, soumis à la rouille et souvent trop complexe quant à la manipulation.

Ce sont ces inconvénients qui ont jusqu'à ce jour empêché ce type de matériel de dépasser le stade de l'artisanat et de répondre aux besoins d'élevages importants du type industriel où les facteurs main-d'oeuvre et énergie sont primordiaux.

De longs essais ont amené la demanderesse à découvrir que la période de culture hors-sol ou hydroponique devait être de huit jours, pour les raisons suivantes :

1) Pendant les huit premiers jours de la vie d'une graine, mise en culture, celle-ci développe, tout d'abord après gonflement, un système racinaire. Ces racines vont atteindre rapidement un développement très important dans le but de pourvoir la future plante en éléments nutritifs et en particulier en eau. Pour ce faire, les processus biologiques de la graine synthétisent en grandes quantités des phytohormones et des vitamines pour favoriser la croissance de la radicule et de la plantule issues de la graine.

2) Dès le troisième ou quatrième jour, une partie aérienne va se développer. Au cinquième jour, débutent les mécanismes de la photosynthèse. La plante utilise ainsi l'énergie lumineuse pour synthétiser de la matière organique, en premier lieu des glucides.

3) La période de huit jours permet, d'autre part, d'atteindre une rentabilité économique très intéressante par la courte durée du cycle complet de culture.

4) Pour conclure, le temps de culture de huit jours permet d'atteindre :
- le développement racinaire le plus intéressant au point de vue phytohormones et vitamines;
- le développement des plantules le plus favorable au point de vue volume de matière verte fraîche, riches en vitamines de la photosynthèse;

- une multiplication très importente des enzymes qui donneront au produit un effet catalytique des plus faborables à la digestion des animaux;

- un grain non épuisé et ayant gardé toute sa valeur nutritive;

- un temps de culture économique.

Le dispositif permettant de réaliser le procédé de l'invention comprend, reposant sur un bâti, huit plateaux pour un cycle de culture de huit jours, de façon que la mise en culture d'un plateau chaque jour permette, dès la fin des premiers huit jours, de réaliser la récolte quotidienne d'un plateau parvenu à maturité.

Le procédé et le dispositif selon l'invention se différencient des procédés et dispositifs antérieurement connus en ce que :

a) - l'appareil est totalement autonome et n'a pas besoin d'un local chauffé. Il suffit qu'il soit placé dans un local normalement éclairé à la lumière du jour;

b) - les plateaux sont fixes et d'une seule pièce. Ils ne nécessitent aucune manutention en cours de culture et leur nettoyage après récolte est facile.

c) - la conception des plateaux chauffants et leur inclinaison permet à la fois leur maintien à la température désirée, le trempage et le ressuyage des graines;

d) - le trempage des graines se fait donc sur les plateaux mêmes de culture, ce qui supprime la nécessité d'un prétrempage et la manutention de grain germé;

e) - on peut omettre l'adjonction de produit fertilisant dans l'eau de trempage, de sorte qu'on obtient un produit totalement naturel, les graines s'étant développées sous l'action de l'eau, de la chaleur et de la lumière solaire;

f) - lors de la récolte du produit, les bandes de graines cultivées que l'on tire en les glissant hors de l'appareil ont une action de nettoyage des plateaux.

Le procédé selon l'invention a été défini de telle sorte qu'il permette la production quotidienne de 100 kg de fourrage vert à partir de 20 à 25 kg de graines, en huit jours de culture.

Remarques : Pour des raisons d'efficacité, la plupart des expériences ont été faites avec de l'orge, graine la plus facile à trouver, la moins chère et consommée pratiquement par tous les animaux. Cependant, tous types de céréales ou de légumineuses peuvent être utilisés selon ce procédé.

DESCRIPTION DE L'APPAREIL

L'appareil pour la mise en oeuvre du procédé selon l'invention comprend tout d'abord huit plateaux de culture, disposés en deux modules de quatre plateaux superposés. Chaque module possède son bâti de support. Ces plateaux sont desservis en eau, chauffés, et comprennent un dispositif d'évacuation d'eau, le tout contrôlé par une armoire électrique contenant tous les moyens de programmation d'asservissement des fonctions.

On décrit ci-après une première variante de l'appareil selon l'invention, illustrée par les figures 1 à 4.

La figure 1 représente un module avec le bâti sur lequel reposent les quatre plateaux.

La figure 2 est une coupe longitudinale d'un module.

La figure 3 est une coupe transversale d'un plateau avec une trémie distributrice.

La figure 4 représente le système de levage des plateaux.

Les plateaux (1) sont formés de telle sorte qu'ils soient relevés sur les quatre bords afin qu'ils puissent servir de bacs de trempage, le trempage se faisant directement dans les plateaux.

Les plateaux sont également divisés dans le sens de la longueur par trois nervures relevées (3) en vue de former quatre travées (2) (d'environ 25 cm de large et 3 m de long). Ceci permet la production de quatre bandes de fourrage d'un poids d'environ 25 kg chacune, aisément manipulables pour la distribution et glissant d'elles-mêmes hors de ces plateaux.

Ceux-ci peuvent également être composés de travées formées séparément, puis accolées ensemble.

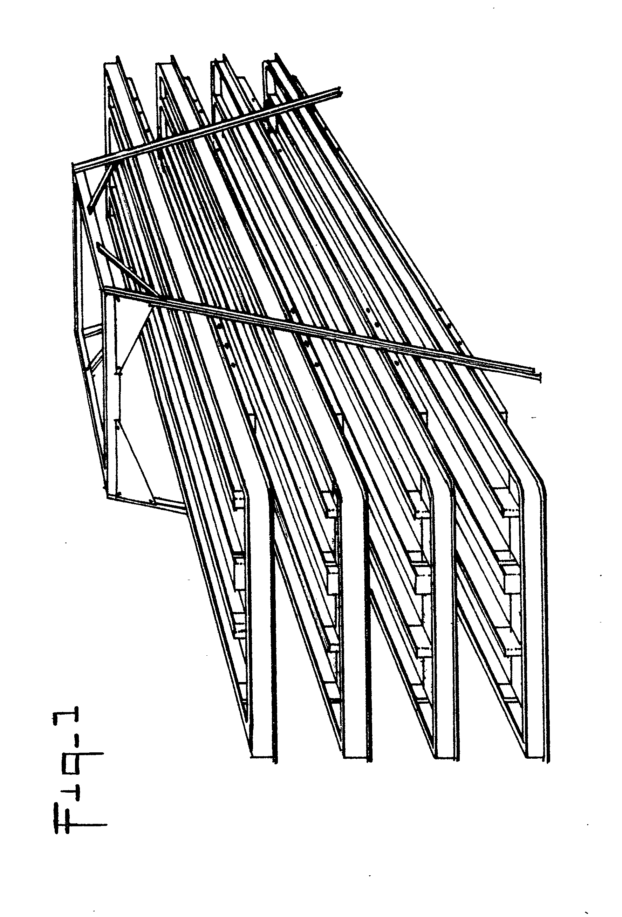

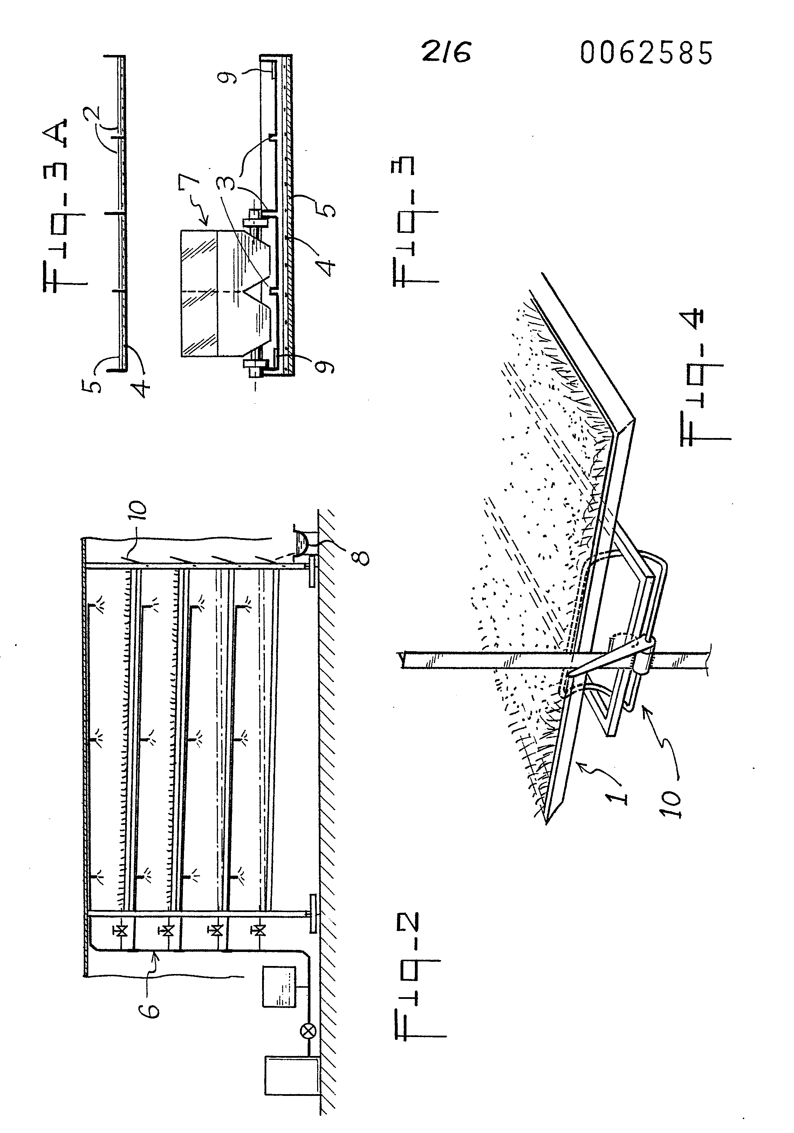

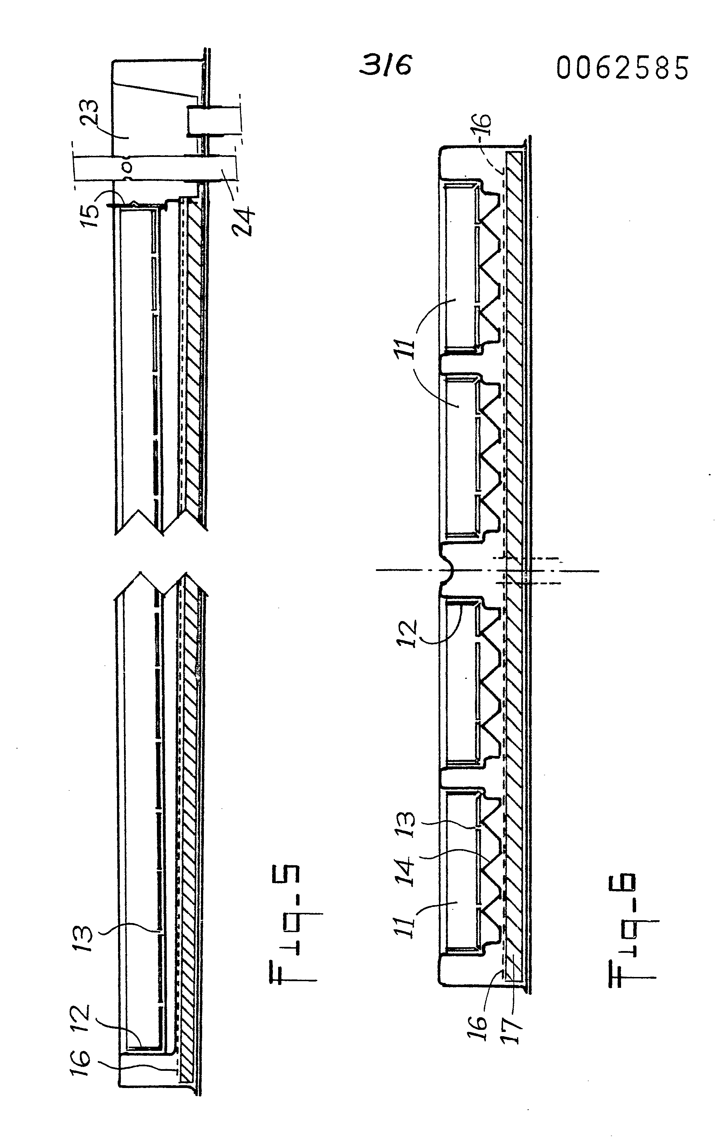

Les plateaux peuvent être constitués de deux façons. Selon une première réalisation (figure 3), deux plaques en PVC ou en métal peint traité, de mêmes dimensions, sont collées ensemble aux extrémités et entre ces deux plaques est fixé un système de résistances électriques (4) et en particulier un film chauffant, tel que celui dénommé Calfilm de la Société Semme, en vue de chauffer la partie supérieure des plateaux. Le film chauffant est lui-même isolé de la plaque inférieure par un isolant (5) (en polyester ou autre) afin de maintenir la chaleur vers le haut. De même, entre les résistances électriques et la plaque supérieure, on peut prévoir une couche d'air en vue de répartir la chaleur uniformément.

Selon une deuxième réalisation (figure 3A), les plateaux sont constitués par une seule plaque en forme de bac, dans le fond duquel est appliqué un film chauffant (4) recouvert lui-même par un isolant protecteur (5) simple ou rigide, en PVC ou autre matière.

- Un thermostat est fixé à chaque plateau en vue d'en régler la température.

- Chacun des plateaux est placé sur chacun des supports du bâti, présentant une inclinaison, la hauteur variant de 20 cm de l'amont vers l'aval (avant du dispositif) pour permettre à l'eau d'aspersion de s'écouler vers l'aval laissant à la graine et à la plantule le temps d'absorber la quantité d'eau dont elles ont besoin.

- Ces plateaux peuvent cependant être basculés de telle sorte que l'on puisse les placer à l'horizontale pour permettre le trempage des graines.

- Ce mouvement basculant est réglé par un levier fixe (10) à l'avant du plateau sur le montant central et vertical du montant en T.

- Un système d'aspersion (6) par brumisation est fixé le long du support transversal au-dessus de chaque plateau. Il y a trois ou quatre brumisateurs par niveau, en vue de bien couvrir par brumisation toute la surface du plateau.

- L'eau d'aspersion est amenée au niveau de chaque plateau par des rampes en PVC longeant le montant vertical arrière du bâti, puis le montant transversal soutenant, dans le sens de la longueur, les barres d'appui des plateaux.

- Au niveau de chaque plateau, une petite arrivée d'eau est prévue dans la rampe qui amène l'eau afin de permettre l'arrosage le long des racines lorsque le besoin s'en fait sentir, l'arrivée

0062585

pouvant être coupée par un petit robinet. Cette arrivée sert à amener l'eau de trempage.

- Une trémie distributrice (7) a été spécialement étudiée en vue de permettre l'étalement des graines sur les plateaux, à la quantité exacte, par deux travées à la fois. Cette trémie, grâce à des roulettes, roule aisément sur les nervures du plateau en étalant d'une façon parfaitement uniforme la quantité de graines désirée.

La trémie comprend une tige télescopique pour en faciliter la manipulation.

- Au bas du bâti, à l'avant aval, tout le long du dispositif a été fixée une gouttière (8) afin d'évacuer les excédents d'eau.

Ces excédents sont amenés à la gouttière par des siphons ou orifices d'évacuation (9) fermés par une petite grille et un bouchon et fixés à l'avant des plateaux.

- Au niveau de l'arrivée d'eau d'aspersion, en cas d'utilisation de solution nutritive et pour ce faire est installée une pompe doseuse afin d'adjoindre cette solution en quantité voulue à l'eau d'aspersion.

- Le dessus du bâti est pourvu d'un toit ou ombrière en PVC opaque afin de donner aux deux plateaux supérieurs le même effet qu'aux plateaux inférieurs. De plus, sur cette ombrière, on peut fixer des tentures verticales en PVC, ou autre matière plastique souple, de telle sorte qu'on isole le dispositif au mieux du froid ambiant en cas de besoin.

Le mode opératoire est le suivant :

Le matin :

1) On enlève le fourrage vert du plateau arrivé à germination complète, c'est-à-dire au bout de 8 jours, en glissant les quatre bandes de fourrage hors du plateau.

2) On nettoie le plateau à l'aide d'une brosse et de l'eau de javel diluée.

3) On pose la trémie distributrice sur le plateau et la remplit de graines (environ 5 kg d'orge par travée, soit 10 kg environ pour la double trémie).

4) On étale les graines sur le plateau.

5) On met le plateau à l'horizontale grâce au système de levage.

6) On amène l'eau de trempage par l'arrivée prévue (environ 20 litres).

7) On met le thermostat à zéro, le trempage devant être fait dans de l'eau froide.

Le soir après 8 heures de trempage :

8) On remet le plateau en pente.

9) On règle le thermostat à la température voulue (15 à 18°C).

10) L'arrosage programmé s'effectue automatiquement (il ne gêne pas durant le trempage).

11) Au 4e jour, lorsque le tapis racinaire est épais, on fait arriver de l'eau le long des racines si nécessaire.

Au matin du 9e jour : On recommence l'opération pour un autre plateau.

Remarque : Après les opérations du matin, le fourrage est normalement distribué aux animaux après avoir été découpé par un découpeur ou broyé par un broyeur.

Selon une deuxième variante, les caractéristiques du dispositif selon l'invention ont été améliorées de la façon suivante :

Les plateaux chauffants sont à double fond et comportent un contre-bac percé de trous, reposant sur un fond incliné en pente douce. Cette caractéristique nouvelle des plateaux permet, d'une part, de laisser les plateaux absolument fixes pendant toute la période de culture, le ressuyage des graines s'effectuant par simple vidange, sans avoir besoin d'incliner les plateaux ; d'autre part, l'irrigation des graines et racines est faite uniquement par montée de l'eau dans l'espace ménagé dans le double fond des plateaux, l'arrosage par brumisation des graines étant supprimé.

Selon une autre caractéristique de la deuxième variante du dispositif, l'eau de trempage et d'irrigation est amenée automatiquement au plateau au moment voulu et en quantité contrôlée.

Le contrôle parfait de la quantité d'eau, grâce à l'irrigation par la base des plateaux et au système de vidange, permet aisément, soit de la recycler, soit de la donner à boire aux animaux.

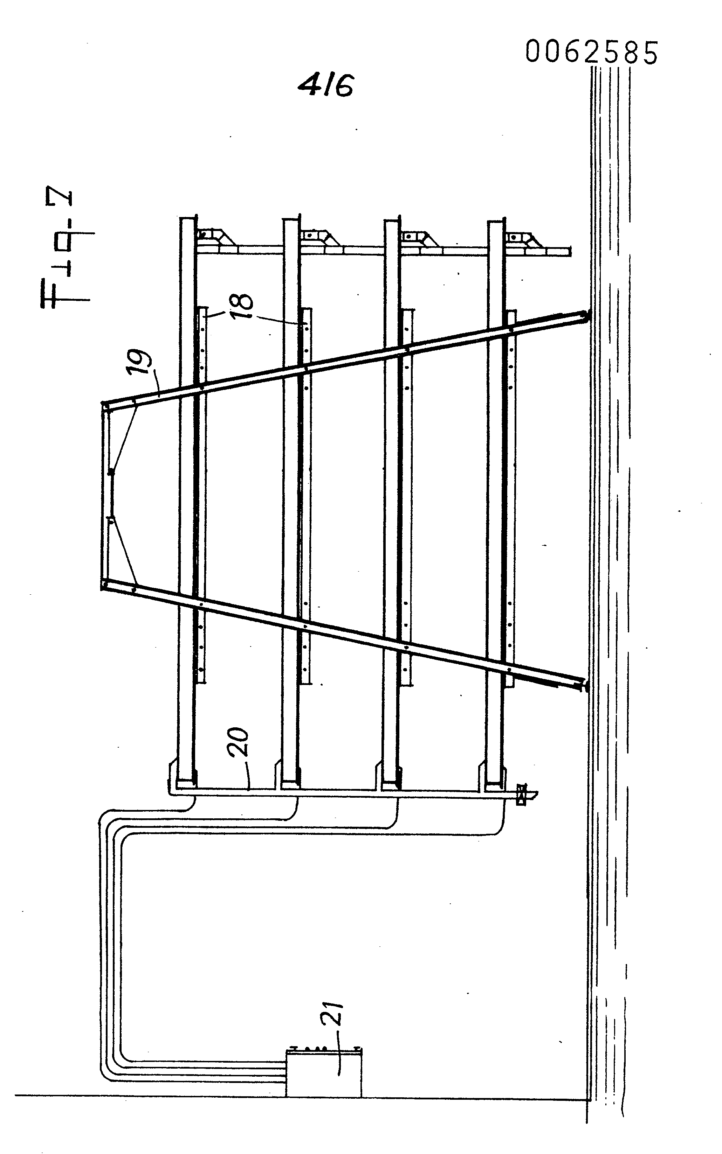

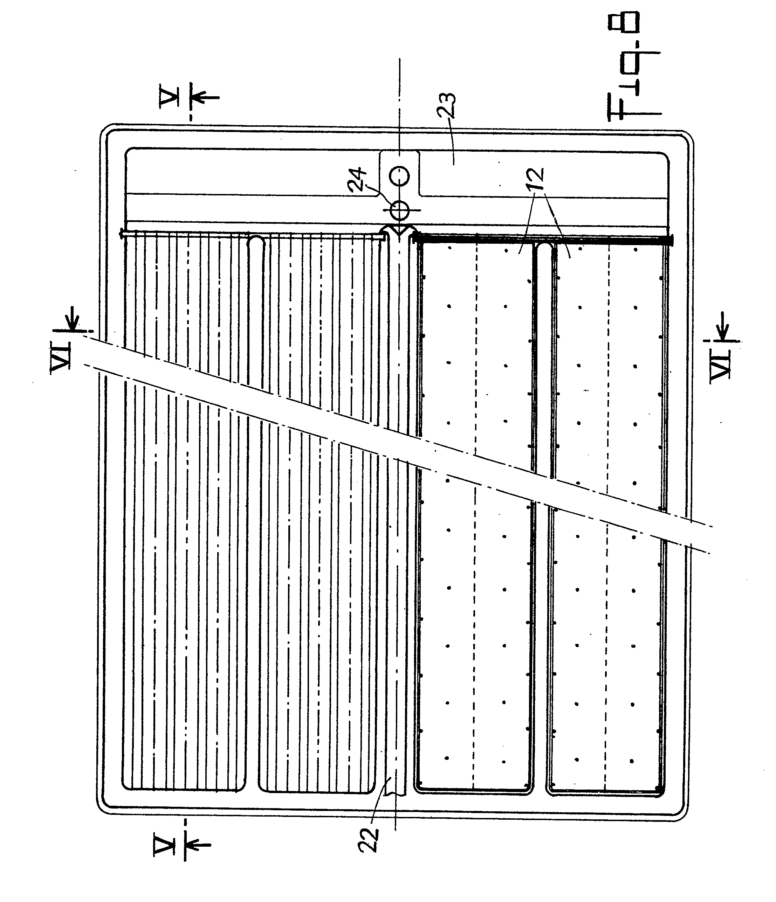

Les figures 5 à 9 ci-après illustrent la deuxième variante du dispositif selon l'invention :

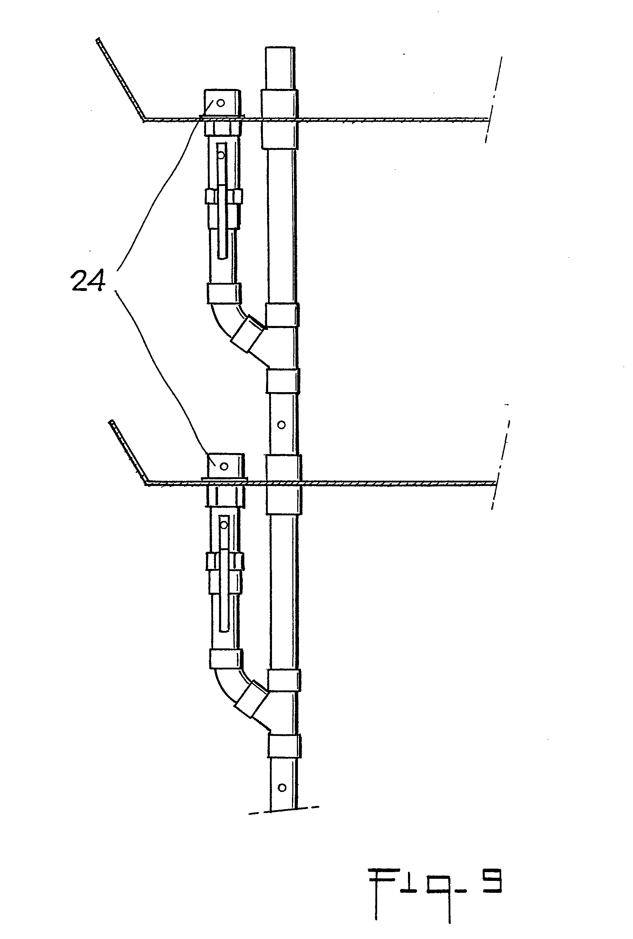

La figure 5 représente une coupe longitudinale II-II et la figure 6 une coupe transversale III-III d'un plateau.

La figure 7 est une élévation d'un module montrant l'alimentation en eau et en électricité au niveau des plateaux.

La figure 8 représente la vue de dessus d'un plateau.

La figure 9 représente en détail le dispositif de vidange.

Les plateaux de culture d'une seule pièce sont moulés en matériaux thermoplastiques, de préférence de couleur blanche à surface. lisse faisant du nettoyage une opération des plus aisées.

Pour ce faire, les plateaux sont divisés en quatre travées moulées (ayant par exemple 23,5 cm de largeur et 3 m de long) visibles en coupe sur la figure 6.

Chaque travée (11) reçoit un contre-bac (12) restant dans la travée lors de la récolte, et dans lequel sera conduite la culture. Le contre-bac est percé de trous (13) placés en quinconce (environ tous les 15 cm par exemple) sur toute sa longueur. Ce contre-bac repose sur des nervures (14) ménageant un espace ou plénum dans le double fond du plateau ; ce plénum permet la circulation de l'eau de trempage et d'irrigation.

Le fond des travées accuse une pente longitudinale de l'arrière vers l'avant des plateaux alors que les contre-bacs sont disposés horizontalement du fait de la forme même des nervures qui ménagent le plénum.

Ces contre-bacs sont bloqués à l'avant par des plaques frontales (15) qui en même temps empêchent la graine et les racines de déborder.

Le chauffage des bacs est obtenu grâce à un film chauffant incorporé dans le fond du plateau, comme décrit ci-dessus dans la première variante. Grâce à un thermostat, la température individuelle de chaque plateau est maintenue automatiquement au niveau désiré.

Ces plateaux auto-chauffants font de l'appareil selon l'invention une unité de production totalement autonome ne nécessitant aucun dispositif de chauffage additionnel du local. Ce local ne doit être que moyennement isolé.

Le film chauffant (16) est disposé entre :

- au-dessus, un écran antistatique à base de peinture métallique, ou une feuille métallique ;

- au-dessous, une couche isolante (17) contre les déperditions thermiques, progétée à la partie inférieure par une feuille de matériau plastique soudée au talon spécialement moulé de la partie supérieure du bac.

Les bâtis de support :

Chaque plateau, de chacun des modules, est porté par un cadre rectangulaire (18) (figure 7) construit à partir de profilés rigides, assemblés par des goussets de renfort.

Ces cadres sont solidaires du bâti de support (19) proprement dit par l'intermédiaire de boulons largement dimensionnés.

Il est à noter qu'aucune mécanique n'existe sur ces bâtis. Ceci permet d'obtenir une grande rigidité ainsi qu'un montage et un démontage ne nécessitant ni connaissances particulières, ni outillage spécial.

L'absence de mécanique réduit l'entretien au seul nettoyage courant.

Le traitement antirouille des profilés ainsi que l'absence de projection d'eau confèrent à ces bâtis une très longue durée d'utilisation.

Système d'irrigation et de trempage :

Le procédé selon l'invention fait appel à un trempage des graines par immersion et à une irrigation par les racines, contrôlées automatiquement après programmation de (des) l'heure(s) et du (des) temps d'admission et de coupure d'arrivée de l'eau.

L'eau d'irrigation est tout d'abord amenée par un faisceau très simple de canalisations disposant en amont d'électrovannes asservies. Plus précisément, cette eau est amenée à pression normale par une rampe centrale (20) (figure 7) placée à l'arrivée du bâti, débouchant dans une gouttière centrale (22) (figure 8), laquelle se déverse dans la gouttière avant (23) du plateau, pour ensuite remonter sous les contre-bacs et petit à petit irriguer les graines et les racines par immersion complète.

L'eau sans adjonction d'aucun élément fertilisant, se déverse dans les plénums pour irriguer, par immersion, la culture. Ce type d'irrigation en pression atmosphérique au niveau des plateaux, permet de supprimer tout risque de projection d'eau dans le local. Le contrôle parfait de la quantité d'eau permet aisément, soit de la recycler, soit de la donner à boire aux animaux.

Système_de_vidange

Afin de contrôler parfaitement les quantités d'eau fournies à la culture ainsi que le temps d'irrigation, l'appareil possède un système de vidange asservi (24) ;

- dès le début de l'irrigation, la vidange se trouve interrompue par électrovanne ou bien par un système électromécanique usuel ne demandant qu'un entretien simplifié à l'extrême ;

- le temps de trempage peut être alors ajusté à la variété des graines mises en culture, et la vidange est effectuée automatiquement après le réglage de l'asservissement électronique ;

- la durée du trempage du premier jour de culture est contrôlée manuellement ou bien asservie ; elle est fixée en général entre 8 et 24 heures. Pour les autres jours, la durée d'irrigation est d'environ un quart d'heure.

Armoire_de_contrôle

Cette armoire (21) (figure 7) contient les circuits permettant de traiter les informations en provenance des plateaux de culture et de commander les différentes variables pour la bonne conduite de la culture :

a) les températures des cultures, à chacun de leurs stades d'avancement, sont enregistrées par huit sondes placées au niveau même de ces cultures (une sonde par plateau) ;

b) huit thermostats, programmés en fonction des variétés des graines, enregistrent les informations en provenance des sondes et commandent le chauffage des plateaux ;

c) une horloge électrique ou électronique, réglable, permet le choix de toutes les variables de temps d'irrigation et de trempage ;

d) chacun des étages d'alimentation, tant en entrée qu'en sortie, de traitement d'informations et de commandes est protégé par des systèmes de sécurité choisis en fonction de leur fiabilité et de leur concordance avec les règlements en vigueur dans ce domaine.

0062585

<u>Remarque</u> :

La conception de ces plateaux chauffants en double
fond (contre-bac percé de trous reposant horizontalement sur un fond,
en forme de pente douce, grâce à des nervures) permet la conjonction
des trois opérations principales, à savoir :

- maintien des plateaux à une température désirée ;

- trempage des graines ;

- ressuyage des graines.

## PRINCIPE ET CONDUITE DE LA CULTURE

### 1er jour

Au matin, après la mise hors cycle normal (manuellement ou automatiquement) du plateau ayant été récolté et nettoyé, la
mise en place du grain manuellement ou à l'aide d'une trémie distributrice, se fait sur le plateau-même qui supportera la culture pendant
toute la durée du cycle de huit jours.

A la fin du temps de trempage choisi, la vidange de
l'eau est effectuée manuellement ou automatiquement et le plateau
entre alors dans le cycle de culture sans aucune autre intervention
jusqu'à la récolte du produit.

La conjonction des systèmes de contrôle de la température des plateaux, de l'irrigation et du ressuyage va permettre
d'atteindre des résultats optimaux tout au long du cycle de culture ;
c'est ainsi que pour les jours suivants :

### 2e jour

Le gonflement du grain s'effectue dans les meilleures
conditions d'irrigation et de température.

### 3e jour

On peut déjà voir, sur beaucoup de grains le matin
et sur la presque totalité le soir, pointer le bout des futures radicules.

### 4e jour

Le développement des racines commence par aller en
s'accélérant. L'augmentation du volume de la culture est déjà importante.

### 5e jour

Les plantules, qui pointaient déjà la veille au soir, commencent leur développement et prennent au cours de la journée la coloration vert tendre qui annonce le début de la photosynthèse.

6e jour

Le tapis blanc des racines est en pleine expansion et la masse du grain arrive à dépasser le bord des plateaux.

Au cours de la journée les plantules s'épanouissent en feuilles définitives.

7e jour

Les racines forment une masse uniforme et déjà très compacte.

Les feuilles accentuent leur développement pour couvrir, en fin de journée, le plateau d'un épais tapis vert.

La photosynthèse est en pleine action.

8e jour

Il est à remarquer que cette journée est une des phases les plus spectaculaires. En effet, entre le matin du 8e jour et le matin du 9e jour, on assiste au doublement de la masse verte de la culture.

Les racines forment déjà une masse indissociable manuellement.

9e jour

Au matin, la culture est conduite à son terme. Le produit est prêt à être consommé par les animaux.

Après avoir retiré les plaques frontales obstruant les quatre travées, il suffit de tirer les bandes de produit pour les faire glisser hors du plateau afin de les découper ou de les rouler pour leur transport.

Cette commodité d'extraction se double d'un effet autonettoyant des fonds des travées. Une fois le produit enlevé, les bacs sont propres et prêts à recevoir le grain du cycle suivant de ce plateau.

Dans le procédé tel que décrit, chaque plateau produit environ, à partir de 20 à 25 kg de graines, en huit jours de culture, 120 à 140 kg d'aliment.

Le même dispositif peut être réalisé dans des dimensions réduites afin de permettre son utilisation par le petit éleveur.

0062585

D'autre part, pour les pays secs et chauds, on peut réaliser des dispositifs présentant les mêmes caractéristiques que précédemment, mais en supprimant le système de chauffage.

R E V E N D I C A T I O N S

--------------------------------

1.      Procédé de culture fourragère hors-sol à partir de graines germées sur des plateaux superposés, caractérisé en ce que les diverses opérations de la culture    sont intégrées de façon semi-automatique dans un seul dispositif et comprennent :

a) l'étalement des graines sur les plateaux de culture, manuellement ou par une trémie distributrice ;

b) le trempage des graines directement sur les plateaux de culture ;

c) l'irrigation programmée des graines ;

d) le chauffage des graines et des racines au niveau des plateaux, contrôlé par thermostat ;

e) l'injection éventuelle de solutions nutritives par pompe doseuse, sur les plateaux.

2.      Procédé selon la revendication 1, caractérisé en ce que le trempage des graines et l'irrigation des racines sont assurés sur les plateaux de culture uniquement par montée de l'eau dans l'espace ménagé dans le double fond des plateaux, et en ce que le ressuyage des graines s'effectue par simple vidange, l'admission et la coupure de l'eau et l'ouverture de la vidange étant commandées automatiquement de façon à régler la quantité d'eau d'irrigation et la durée d'immersion des graines chaque jour sur chaque plateau.

3.      Dispositif pour la réalisation du procédé selon la revendication 1, comprenant un bâti composé de deux éléments ou modules munis chacun de quatre supports sur lesquels reposent quatre plateaux, caractérisé en ce que :

- chaque plateau présente une inclinaison longitudinale vers l'avant du dispositif ;

- un système de levage des plateaux fixé sur le bâti à l'avant du dispositif permet de mettre les plateaux en position horizontale ;

- un système de chauffage des plateaux par résistances électriques est incorporé dans la paroi de ceux-ci ;

- une trémie distributrice des graines sur les plateaux peut être déplacée au-dessus de ceux-ci pour étaler uniformément les graines ;

- un système d'aspersion par brumisation, programmé, est fixé au-dessus de chaque plateau ;

- une arrivée d'eau au niveau de chaque plateau amène l'eau de trempage et comporte sur son trajet une pompe doseuse permettant d'injecter une quantité déterminée de solution nutritive.

4.      Dispositif selon la revendication 3, caractérisé en ce que chaque plateau est constitué par deux plaques de mêmes dimensions, collées aux extrémités et entre lesquelles sont fixés un système de résistances électriques, de préférence un film chauffant, et une plaque isolante entre ce dernier et la plaque inférieure du plateau.

5.      Dispositif selon la revendication 3, caractérisé en ce que chaque plateau est constitué par une seule plaque en forme de bac, dans le fond duquel est appliqué le film chauffant, recouvert lui-même par un isolant protecteur, souple ou rigide.

6.      Dispositif pour la réalisation du procédé selon la revendication 2, comprenant huit plateaux de culture disposés en deux modules de quatre plateaux superposés fixés sur un bâti de support, caractérisé en ce que chaque plateau comporte :

a) un double fond constitué par des contre-bacs percés de trous reposant sur un fond incliné en pente douce et portant des nervures ménageant ainsi un espace ou plénum dans lequel l'eau circule et remonte dans les contre-bacs pour irriguer les graines et les racines par immersion ;

b) un système d'évacuation d'eau à l'aval du fond incliné ;

c) un système de chauffage par résistances électriques incorporées dans le fond du plateau.

7.      Dispositif selon la revendication 6, caractérisé en ce que l'ouverture et la fermeture de l'arrivée d'eau dans le double fond de chaque plateau, et l'ouverture et la fermeture du système de vidange sont commandées manuellement ou automatiquement de façon à régler chaque jour la quantité d'eau admise, le temps et la durée de trempage et d'irrigation.

8.      Dispositif selon l'une des revendications 6 et 7, caractérisé en ce que la température de chaque plateau est maintenue automatiquement au niveau désiré grâce à un thermostat.

Fig-1

0062585

Fig-3A

Fig-3

Fig-4

Fig-2

Fig-5

Fig-6

Fig. 7

18
19
20
21

Fig. 8

24

Fig. 9

Office européen
des brevets

**RAPPORT DE RECHERCHE EUROPEENNE**

0062585
Numéro de la demande

EP 82 40 0607

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | BE - A - 752 799 (VAN POTTELS-BERGHE)<br><br>* page 2, paragraphe 5 - page 3, dernier paragraphe; figures * | 1,3 | A 01 G 31/00<br>A 01 G 31/02 |
| Y | FR - A - 857 501 (SOCIETE POUR L'EXPLOITATION DES PROCEDES CHARLES STRACK & LOUIS MAONY)<br><br>* page 2, ligne 20 - page 3, ligne 42; figures 1-4 * | 1,3 | |
| Y | FR - A - 1 530 123 (AUTROPONICS)<br><br>* page 2, colonne de droite, paragraphe 7 - page 3, colonne de droite, paragraphe 1; figures 1,2 * | 1,3 | DOMAINES TECHNIQUES RECHERCHES (Int. Cl. ³) |
| Y | CH - A - 353 572 (VAN EESSEL)<br><br>* page 1, ligne 56 - page 4, ligne 52; figures 1-8 * | 1,2,6 | A 01 G 31/00<br>31/02<br>A 01 C 1/02 |
| A | FR - A - 1 226 276 (BREVESA)<br><br>* totalité du brevet * | 2,6 | |

Le présent rapport de recherche a été établi pour toutes les revendications

| Lieu de la recherche | Date d'achèvement de la recherche | Examinateur |
|---|---|---|
| La Haye | 06-07-1982 | HERYGERS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82